# EUROPEAN PATENT APPLICATION

(11) **EP 4 060 894 A1**
(43) Date of publication of application: **21.09.2022**
(21) Application number: 22000062.4
(22) Date of filing: 17.03.2022
(51) Int. Cl.: H02S 20/10, F24S 25/11, H02S 20/23, H02S 20/24

(54) **BALLAST TANK**

(30) Priority: 18.03.2021 PL 43733921
(71) Applicant: Hurt-Max Spólka z o.o., 43-200 Pszczyna (PL)
(72) Inventor: Szczygìel, Marcin, 44-100 Gliwice (PL); Wróbel, Ryszard, 43-200 Pszczyna (PL); Perz, Grzegorz, 41-303 Dabrowa Górnicza (PL); Kowalik, Adam, 43-241 Laka (PL)

(57) **Abstract**

The plastic ballast tank for photovoltaic panels is characterized in that it has the shape of a pyramid preferably truncated with a hollow chamber inside, whose the upper base 1 is set at an angle of 1 to 35° to the lower base 2 with a square base, rectangle, trapezoid or quadrilateral and has at least one filling aperture 3 and at least one blind mounting hole 4 on the upper base 1, and in its vertical cross-section is approximately a triangle or a quadrilateral, preferably a trapezoid.

## Description

The subject of the invention is a ballast tank used especially for mounting structures as a fastening element for structures primarily on flat roofs, especially for the installation of photovoltaic panels.

Systems for mounting photovoltaic panels, where the panel is mounted on metal profiles of various shapes, are known in the industry.

It is known from PL/EP2541162, a device enabling the installation of photovoltaic panels, wherein the thermally shaped plate is adapted to be inserted into the photovoltaic panel and to enable the fixing and integration of this panel on the roof of a building, containing water-resistant means for lateral insertion and vertical overlapping, a cavity for the passage of cables and providing access to the skeleton structure of the said roof, and a batten positioned to prevent water from flowing from the ridge of the said roof into the said cavity, characterized in that the said batten includes a groove for conducting cables between the said plate and the said photovoltaic panel.

It is known from EP1184526B1, a device for mounting panels, which has a cavity in which a photovoltaic cell module is located on the upper surface of a tile body placed on a roof or similar location of a house. A fitting section having a groove is formed by undercutting at least one side of the recess. An end section of the photovoltaic cell module is inserted and fitted into the mounting section. The photovoltaic cell module is thus removably attached to the recess of the plate body.

It is known from DE202010014168U1, a device having an integrated solar panel for the direct and automatic generation of a solar laminate for heat dissipation from a chimney effect. The body is composed of a suitable supporting material to ensure the stability and tightness of the roof.

It is known from WO2020217064, a photovoltaic roofing solution comprising a tile with an anchor portion for attaching a base tile to a portion of the roof in use, wherein a spacer is used to support a portion of another applied base tile in use by spacing the applied tile from the photovoltaic panel. The base tile roofing has a flat upper surface and an opposing lower surface. The base tile includes an anchoring portion positioned towards one end of the lower surface of the base tile and is prepared for attaching the base tile to a portion of the roof structure in use. The interconnecting part is prepared for connecting the base tile to an adjacent base tile during use. The roof covering includes a rectilinear covering panel. The base tile and the covering panel are arranged such that the lateral edges of the covering panel are offset relative to the lateral edges of the first upper surface of the flat base tile to form an insert.

It is known from US20090266406, a solar panel holder with mounts that allow easy attachment to the solar panel holders and can be made from recycled plastic by vacuum forming.

In the existing solutions, it is inconvenient to place weights on roof surfaces due to the problem of transporting heavy and sharp-edged elements that can damage the roof surface and the structure they support, or the need to install a photovoltaic panel directly into the structure.

The aim of the invention is to develop such a supporting structure for a ballast tank that will stably support elements of structures mounted on flat roofs, i.e., photovoltaic panels. Contrary to the previously known solutions, the proposed invention is characterized by a lower weight, which enables its easy transport, while maintaining durability, and mechanical strength and ensuring the stability of the structure, and the absence of sharp edges that could mechanically damage the surface of the roof. The features of the invention are its low weight, high load-bearing capacity, and stability as well as ergonomic shape without sharp edges. The essence of the invention is a plastic ballast tank for photovoltaic panels characterized in that it has the shape of a preferably truncated pyramid with a hollow chamber inside, the upper base of which is set at an angle between 0 and 35° to the lower base of a square base, rectangular, trapezoid or quadrilateral in shape and has at least one filling aperture and at least one blind mounting opening on the upper base, and in the vertical cross-section it is approximately a triangle or a quadrilateral, preferably a trapezoid. Preferably, the pyramid has a vertical cross-sectional shape of a preferably right-angled triangle or a preferably right-angled quadrilateral. Preferably, it has at least one transport handle on the upper base, preferably U-shaped or oblong, preferably of circular or quadrilateral cross-section. Preferably, in the upper base under the transport handle, there is an approximately U-shaped recess. Preferably, the filling aperture is located in the rear wall or the sidewall, or the upper base. Preferably, there are 1 to 5 filling apertures. Preferably, there are 1 to 20 mounting holes and preferably on the upper base. Preferably, the upper base has the shape in a cross-section of a straight broken line consisting of five sections, whose sections O1 and O3 are parallel to the lower base, and whose sections O2 and O5 are included in a single straight line intersecting at an angle of 0 to 35° the line containing the longer side of the lower base. Preferably, the upper base has a shape in the cross-section of a straight broken line consisting of six sections, whose sections O1, O3, and O6 are parallel to the lower base, and whose sections O2 and O5 are included in a single straight line intersecting at an angle from 0 to 35° the line containing the longer side of the lower base. Preferably, the filling aperture is on the rear wall, preferably at a height Hc, where the ratio of the height Hc from the lower base to the axis of symmetry on the upper plane of the hole to the length L of the lower base is 0.4÷0.45. Preferably, the ratio of the width W of the lower base to the length L of the lower base is 0.35-0.45 preferably 0.4. Preferably, the ratio of the height H_{L} from section O1 of the upper base to the length L of the lower base is 0.14 to 0.16 preferably 0.15. Preferably, the ratio of the height HM from section O3 of the upper base to the length L of the lower base is 0.24 to 0.26, preferably 0.25. Preferably, the ratio of the height HH from section O6 of the upper base to the length L of the lower base is 0.44 to 0.46. Preferably, the ratio of the inclination angle α of the upper base to the lower base, excluding the sections parallel to the lower base, is A/L=0.015÷0.04, preferably 21°. Preferably, it has vertical convex ribs on the sidewalls, preferably in a number from 1 to 14. Preferably, the ribs are along with the entire height of the sidewall, preferably arranged in a parallel way, preferably at equal distances. Preferably, it has 1 to 10 mounting holes on the upper base, preferably four mounting holes. Preferably, the mounting holes are equally spaced from a straight line defined by the axis of symmetry of the upper base. Preferably, in the front wall, it has at least one blind front mounting hole, preferably four, most preferably symmetrically arranged with respect to the vertical axis of the front wall. Preferably, the rear wall has at least one rear blind mounting hole, preferably four, most preferably symmetrically arranged with respect to the vertical axis of the rear wall. Preferably, in the rear wall, it has at least one, preferably one to four horizontal convex ribs.

The ballast tank is used in particular as a structural mounting element primarily on flat roofs, especially for the installation of photovoltaic panels, but also on pitched roofs with a slope of up to 25°.

The ballast tank can be filled with antifreeze or loose material such as sand. The ballast tank is made of plastic with high mechanical strength, high melting point, a high barrier against gases, and high chemical resistance. The overall dimensions vary depending on the volume and the purpose of the tank, for the components to be installed. These dimensions change in proportion to the length of the tank L.

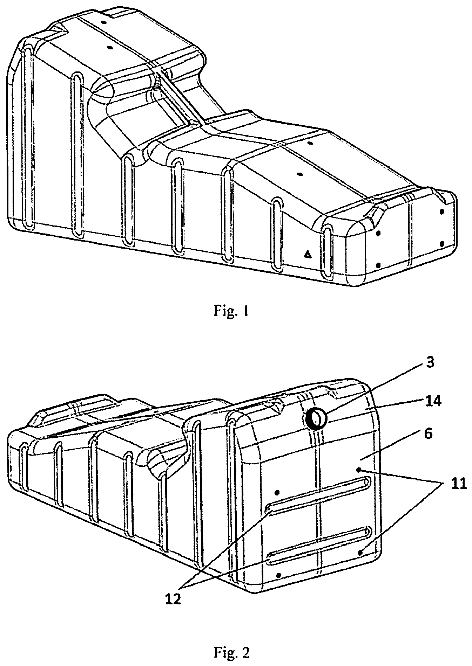

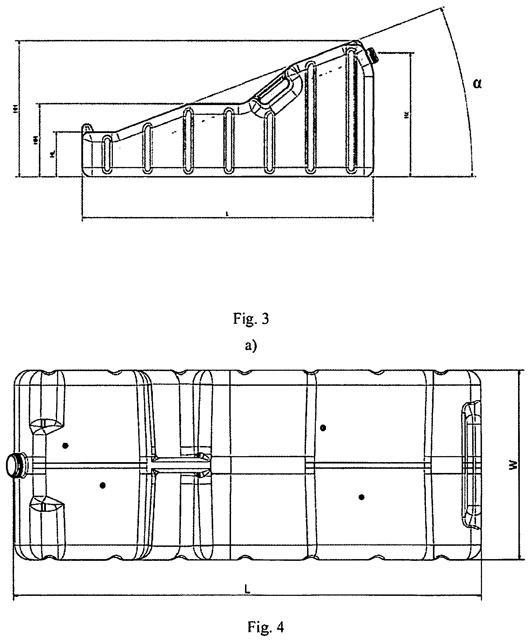

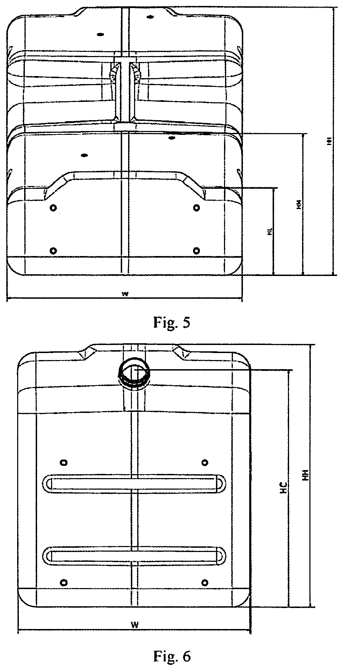

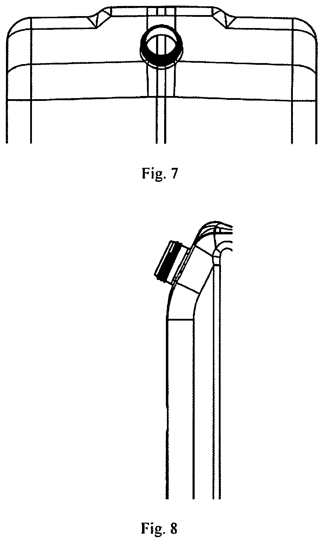

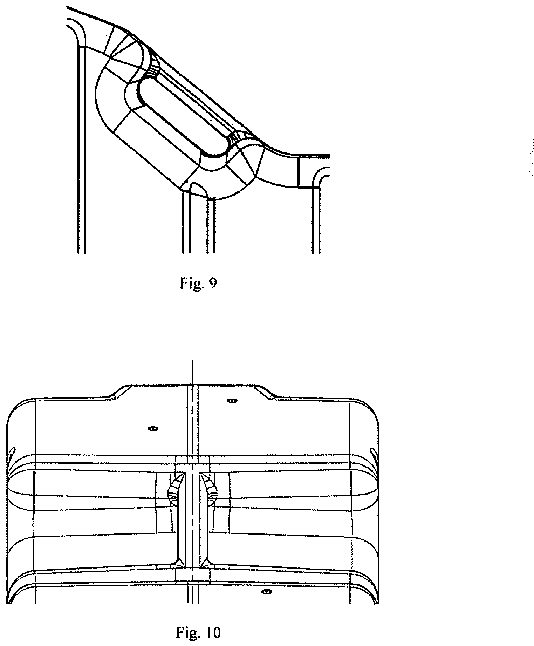

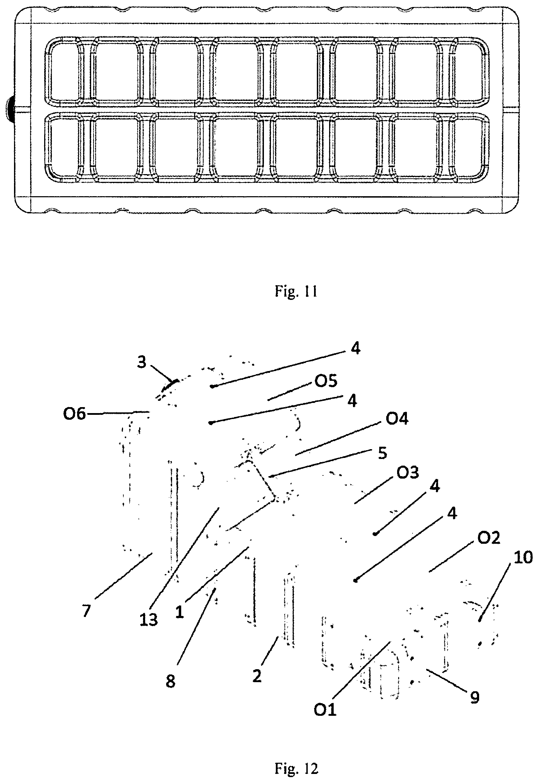

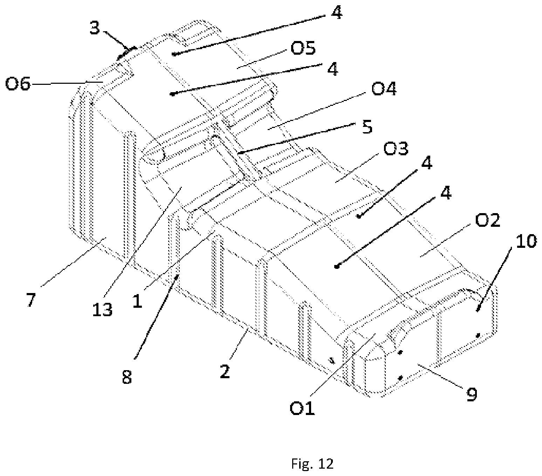

The invention is disclosed in the drawings, in which figs. 1, 2, and 12 show the tank in a general isometric view, Fig. 3 in a side view, Fig. 4 in a top view, and Figs. 5 and 6 arrangement of mounting holes, Figs. 7 and 8 the location of the filling aperture, Fig. 9 a "transport" handle, and Figs. 10 and 11 examples of the arrangement of the ribs on the bottom and sides of the tank.

### Example I.

The plastic ballast tank for photovoltaic panels has the shape of a truncated pyramid. It has an empty chamber inside. The chamber can be filled with water with glycol or bulk material.

The upper base 1 of the tank is set at an angle of 21 ° to the lower base 2 with a rectangular base and has one filling aperture 3 and four blind mounting holes 4 on the upper base 1. In the vertical cross-section, it is a rectangular trapezoid.

The tank has an elongated transport handle 5 with a circular cross-section. The transport handle 5 is on the upper base 1 and under the transport handle 5 there is an approximately U-shaped recess 13.

The filling aperture 3 is located in the rear wall 6.

The upper base 1 has the shape in a cross-section of a straight broken line consisting of six sections, whose sections O1, O3, and O6 are parallel to the lower base, and whose sections O2 and O5 are included in a single straight line intersecting at an angle of 21 ° the straight line containing the longer side of the lower base 2. Section O4 constitutes a recess with a transport handle 5.

The filling aperture 3 is on the rear wall 6, at a height He, where the ratio of the height Hc from the lower base to the axis of symmetry on the upper plane of the hole to the length L of the lower base 2 is 0.4.

The ratio of the width W of the lower base 2 to the length L of the lower base 2 is 0.4.

The ratio of the height HL from section 01 of the upper base 1 to the length L of the lower base 2 is 0.15.

The ratio of the height HM from section O3 of the upper base 1 to the length L of the bottom base 2 is 0.25.

The ratio of the height HH from section O6 of the upper base 1 to the length L of the lower base 2 is 0.45.

The ratio of the angle α of the inclination of the upper base 1 to the lower base 2, excluding the sections parallel to the lower base 2, is 21°.

The tank on the side walls 7 has vertical convex ribs 8, seven in number. The ribs 8 are along with the entire height of the sidewall 7, arranged in parallel, at equal distances.

The mounting holes 4 are spaced at equal distances from a straight line defined by the axis of symmetry of the upper base 1.

In the front wall 9, there are four front mounting holes 10 arranged symmetrically with respect to the vertical axis of symmetry of the front wall 9.

In the rear wall 6, there are four blind rear mounting holes 11 arranged symmetrically with respect to the vertical axis of symmetry of the rear wall 6.

In the rear wall 6, there are two convex horizontal ribs 12, across the entire width of the rear wall 6, arranged in parallel, at equal distances.

### Example II.

A plastic ballast tank for photovoltaic panels has the shape of a pyramid with a hollow chamber inside, whose upper base 1 is set at an angle of 12° to the lower base 2 with a square base and has one filling aperture 3 on the rear wall 6 and four blind mounting holes 4 on the upper base 1 and is triangular in vertical cross-section.

### Example III.

A plastic ballast tank for photovoltaic panels has the shape of a truncated pyramid with a hollow chamber inside, whose upper base 1 is set at an angle of 25° to the lower base 2 with a rectangular base and has one filling aperture 3 on the rear wall and four blind mounting holes 4 on the upper base 1 and is trapezoidal in vertical cross-section.

### Example IV.

A plastic ballast tank for photovoltaic panels has the shape of a truncated pyramid with a hollow chamber inside, whose upper base 1 is set at an angle of 25° to the lower base 2 with a rectangular base and has one filling aperture 3 and four blind mounting holes 4 on the upper base 1 and is trapezoidal in vertical cross-section. The mounting holes 4 are arranged at equal distances from the straight line defined by the axis of symmetry of the upper base 1.

The tank has one elongated transport handle 5 on the upper base 1 with a circular cross-section.

In the upper base 1 under the transport handle 5, there is an approximately U-shaped recess 13. The filling aperture 3 is located in the rear wall 6.

The upper base 1 has the shape in a cross-section of a straight broken line consisting of five sections, whose sections O1 and O3 are parallel to the lower base 2, and whose sections O2 and O5 comprise a single straight line intersecting at an angle of 21° the straight line containing the longer side of the lower base 2. Section O4 constitutes a recess with a transport handle 5.

The filling aperture 3 is on the rear wall 6, at a height Hc, where the ratio of the height Hc from the lower base 2 to the axis of symmetry on the upper plane of the filling aperture 3 to the length L of the lower base 2 is 0.45.

The ratio of the width W of the lower base 2 to the length L of the lower base 2 is 0.4.

The ratio of the height HL from section O1 of the upper base 1 to the length L of the lower base 2 is 0.15.

The ratio of the height HM from section O3 of the upper base 1 to the length L of the lower base 2 is 0.25.

The ratio of the height HH from section O6 of the upper base 1 to the length L of the lower base 2 is 0.45.

The ratio of the angle α of the inclination of the upper base 1 to the lower base 2, excluding the sections parallel to the lower base 2, is 21°.

On the sidewalls 7, the tank has vertical convex ribs 8, seven in number. The ribs 8 are along with the entire height of the sidewall 7, arranged in parallel, at equal distances.

The front wall 9 has four blind front mounting holes 10, symmetrically arranged with respect to the vertical axis of the front wall 9. The rear wall 6 has four blind rear mounting holes 11, symmetrically arranged with respect to the vertical axis of the rear wall 6. The rear wall 6 has two horizontal convex ribs 12.

### Example V.

Example V differs from the example I in that the rear wall 6 has a deflection 14 in the upper part, on which this deflection 14 the filling aperture 3 is seated. Preferably, the axis of the filling aperture 3 is inclined to the lower base 2 at an angle of 30°.

### Example VI.

Example VI differs from example IV in that the lower base 2 is trapezoidal and in vertical cross-section, the tank is trapezoidal in shape. The tank has blind mounting holes 4 in a number of six on the upper base 1. The mounting holes 4 are arranged at equal distances from the straight line defined by the axis of symmetry of the upper base 1.

The tank has a transport handle 5 on the upper base 1 in a U-shape.

The filling aperture 3 is located in the sidewall 7.

The tank has 20 mounting holes.

On the side walls 7, the tank has vertical convex ribs 8, four in number. The ribs8 are not at the entire height of the sidewall 7 - they are at different heights, arranged in parallel, and at different distances.

The filling aperture 3 is on the back wall 6, at a height Hc, where the ratio of the height He from the lower base 2 to the axis of symmetry on the upper plane of the hole to the length L of the lower base 2 is 0.4.

The ratio of the width W of the lower base 2 to the length L of the lower base 2 is 0.35

The ratio of the height HL from section O1 of the upper base 1 to the length L of the lower base 2 is 0.16.

The ratio of the height HM from section O3 of the upper base 1 to the length L of the lower base 2 is 0.26.

The ratio of the height HH from section O6 of the upper base 1 to the length L of the lower base 2 is 0.46.

The ratio of the angle α of the inclination of the upper base 1 to the lower base 2, excluding the sections parallel to the lower base 2, is 32°

### Example VII.

Example VI differs from example IV in that the filling aperture 3 is in the upper base 1.

The filling aperture 3 is on the rear wall 6, at a height He, where the ratio of the height Hc from the lower base 2 to the axis of symmetry on the upper plane of the opening to the length L of the lower base 2 is 0.45.

The ratio of the width W of the lower base 2 to the length L of the lower base 2 is 0.45.

The ratio of the height HL from section 01 of the upper base 1 to the length L of the lower base 2 is 0.14.

The ratio of the height HM from section O3 of the upper base 1 to the length L of the lower base 2 is 0.24.

The ratio of the height HH from section O6 of the upper base 1 to length L of the lower base 2 is 0.44.

The ratio of the angle α of the inclination of the upper base 1 to the lower base 2, excluding the sections parallel to the lower base 2, is 10°.

### Example VIII.

Example VIII differs from Example IV in that the tank has two filling apertures 3 - one in the rear wall 6 and the other in the sidewall 7.

## Claims

1. A plastic ballast tank for photovoltaic panels, **characterized in that** it has the shape of a pyramid preferably truncated with a hollow chamber inside, whose the upper base 1 is set at an angle of 1 to 35° to the lower base 2 of a square, rectangular, trapezoidal or quadrilateral base and has at least one filling aperture 3 and at least one blind mounting hole 4 on the upper base 1, and in its vertical cross-section is approximately a triangle or a quadrilateral, preferably a trapezoid.

2. The tank according to claim 1 is **characterized in that** the pyramid is in the shape of a triangle, preferably rectangular, or in the shape of a quadrilateral, preferably rectangular, in its vertical cross-section.

3. The tank according to claims 1 or 2 is **characterized in that** it has at least one transport handle 5 on the upper base 1 preferably U-shaped or elongated, preferably circular or quadrilateral in cross-section.

4. The tank according to claims 1, 2, or 3 is **characterized in that** there is an approximately U-shaped recess 13 in the upper base 1 under the transport handle 5.

5. The tank according to claims 1, 2, 3, or 4 is **characterized in that** the filling aperture 3 is located on the rear wall 6 or the sidewall 7 or on the upper base 1.

6. The tank according to claims from 1 to 5, is **characterized in that** there are from 1 to 5 filling apertures 3.

7. The tank according to claims from 1 to 6 is **characterized in that** there are from 1 to 20 mounting holes 4 preferably on the upper base 1.

8. The tank according to claims from 1 to 7, is **characterized in that** the upper base 1 is in the shape of a straight broken line consisting of five sections, of which sections O1 and O3 are parallel to the lower base 2, and sections O2 and O5 are included in a single straight line intersecting at an angle of 1 to 35° the line containing the longer side of the lower base 2.

9. The tank according to claims from 1 to 7, is **characterized in that** the upper base 1 has the shape in a cross-section of a straight broken line consisting of six sections, of which sections O1, O3 and O6 are parallel to the lower base 2, and sections O2 and O5 are included in a single straight line intersecting at an angle of 1 to 35° the line containing the longer side of the lower base 2.

10. The tank according to claims 8 or 9, is **characterized in that** the filling aperture 3 is on the rear wall 6 preferably at a height He, where the ratio of the height He from the lower base 2 to the symmetrical axis on the upper plane of the tank on the upper plane of the filling aperture 3 to the length L of the lower base 2 is 0.4÷0.45.

11. The tank according to claims from 8 to 10, is **characterized in that** the ratio of the width W of the lower base 2 to the length L of the lower base 2 is from 0.35 to 0.45, preferably 0.4.

12. The tank according to claims from 8 to 11, is **characterized in that** the ratio of the height HL from the section O1 of the upper base 1 to the length L of the lower base 2 is from 0.14 to 0.16 preferably 0.15.

13. The tank according to claims from 8 to 12, is **characterized in that** the ratio of the height HM from the section O3 of the upper base 1 to the length L of the lower base 2 is from 0.24 to 0.26, preferably 0.25.

14. The tank according to claims from 8 to 13, is **characterized in that** the ratio of the height HH from the section O6 of the upper base 1 to the length L of the lower base 2 is from 0.44 to 0.46.

15. The tank according to the claims from 8 to 14, is **characterised in that** the ratio of the angle α of inclination of the upper base 1 to the lower base 2, excluding the sections parallel to the lower base 2 is A/L=0.015÷0.04, preferably 21°, and/or on the sidewalls 7 it has vertical convex ribs 8, preferably in an amount of 1 to 14, and/or the ribs 8 are along the entire height of the sidewall 7, preferably arranged in parallelly, preferably at equal distances, and/or it has from 1 to 10 mounting holes 4 on the upper base 1, preferably four mounting holes 4, and/or the mounting holes 4 are arranged equidistant from the straight line defined by the axis of symmetry of the upper base 1, and/or in the front wall 9 it has at least one blind front mounting hole 10 preferably four, most preferably arranged symmetrically with respect to the vertical axis of the front wall 9, and/or in the rear wall 6 has at least one blind rear mounting hole 11, preferably four, most preferably arranged symmetrically with respect to the vertical axis of the rear wall 6, and/or in the rear wall 6 has at least one, preferably from one to four convex horizontal ribs 12.
